# EUROPEAN PATENT SPECIFICATION

(11) **EP 0 500 207 B1**
(45) Date of publication and mention of the grant of the patent: **07.08.1996**
(21) Application number: 92300450.1
(22) Date of filing: 17.01.1992
(51) Int. Cl.: F16K 1/34, F16K 25/00

(54) **Fluid flow controller**
Durchflussregler
Régulateur du débit

(30) Priority: 20.02.1991 JP 49150/91
(43) Date of publication of application: 26.08.1992
(73) Proprietor: Kiyohara, Masako, Kumamoto-shi Kumamoto-ken (JP)
(72) Inventor: Kojima, Tetsuya, c/o Fujikin Inc., Osaka (JP); Nakazawa, Masahiko, c/o Fujikin Inc., Osaka (JP); Matsumoto, Hisayoshi, c/o Fujikin Inc., Osaka (JP); Shimomura, Yoshinori, c/o Fujikin Inc., Osaka (JP)
(74) Representative: Daley, Michael John

(56) References cited:
- EP-A- 0 069 034
- DE-A- 2 038 905
- DE-A- 2 454 452
- DE-A- 2 724 790
- DE-C- 659 838
- DE-C- 690 379
- US-A- 3 399 695
- US-A- 3 508 739

## Description

The invention relates to a fluid flow control assembly for use in semiconductor manufacturing equipment, vacuum equipment, medicine and food manufacturing equipment and the like, and more particularly, to a valve having good durability and sealing.

The closure parts of existing valves have generally involved metal to resin contact or metal to metal contact.

Metal to resin contact being superior in sealing performance and durability, has been extensively used for semiconductor manufacturing equipment, medicine and food manufacturing equipment and the like. However, the combination of metal and resin in valves involves a number of problems.

The first problem is the problem of gas substitution performance. Generally, once gas has entered into a narrow gap, it is extremely difficult to remove. In a closure having the combination of metal and resin, it is necessary to fix the resin to metal (for example, to fix the resin to the tip of a stem), causing a gap. Removal of the gas that has entered into the gap is difficult, prejudicing the performance of the valve in respect to gas substitution.

The second problem is the problem of discharging gas from the resin. Various gas components are contained in the resin and such components are desorbed with the rise in vacuum. As a result of this, reduced degree of vacuum or prolonged vacuuming time is caused by discharging the foregoing gas.

As a means for solving these problems it has been proposed to reduce the volume or the surface area of resin and to use improved materials, but these proposals have not been entirely successful.

A metal to metal closure does not present the foregoing problems. Therefore, arrangements such as shown in Figure 5 through Figure 7 have been used.

However, in the closure part A of the conical type as shown in Figure 5, because the valve body B slides against the valve seat C, pulverized particles are generated by sliding. In the flat type closure part A shown in Figure 6, the sealing performance between the valve body B and the valve seat C is relatively low. Further, in the protruding type closure part A shown in Figure 7, crushing, denting or flaking is likely to occur in the part where the valve body B and the valve seat C come in contact.

In a closure part having the combination of metals, in order to increase the sealing performance thereof, machining accuracy of the sheet surface can be increased, soft metal can be used, and the surface pressure of the sheet section should be increased among other conditions. Various types of restrictions are involved including the rise in machining costs, generation of dust of pulverized particles and occurrence of crushing and deformation.

The present invention sets out to solve problems such as the foregoing.

According to the present invention there is provided a fluid flow control assembly with a closure part comprising a valve body and a valve seat which contact one another to shut off the fluid flow characterised in that the valve body comprises a valve body part, a metallic film covering in an air-tight manner the lower face and the lower parts of the side faces of the valve body part, and having on the lower face a ring-shape rib or contacting the seat, and a resiliently deformable body supporting the reverse side of the metallic film.

In the fluid flow control valve according to the invention when the valve is to be closed, the valve body moves to contact the valve seat. As closure force is applied the film is deformed to the configuration of the surface of which it contacts, this deformation being allowed by deformation of the resiliently deformable body.

As the closure force applied to the valve body is released, the film and the body having been subjected to slight elastic deformation restore their original shape.

DE-A-2,724,790 discloses in Figures 9 and 10 a fluid flow control assembly with a closure part comprising a valve body and a valve seat which contact one another to shut off the fluid flow. The contact between the valve body and the valve is by way of a resiliently deformable metal covered ring which does not cover the valve body part as set out above.

The invention will now be described by way of example and with reference to the drawings wherein:-

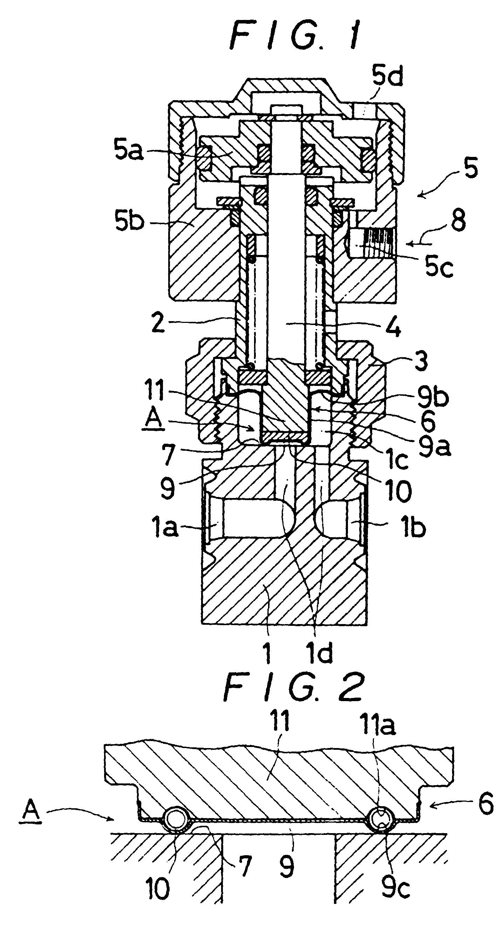

Figure 1 is a longitudinal section of a fluid controller according to the first embodiment of the present invention.

Figure 2 is a section illustrating the closure part A of a fluid controller according to the second embodiment of the present invention.

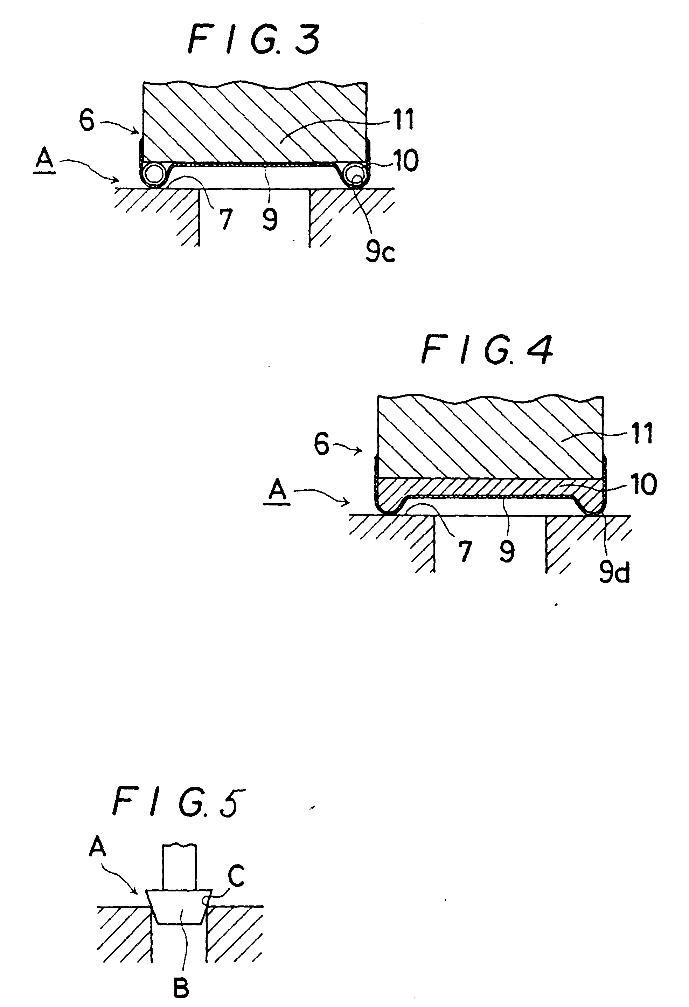

Figure 3 is a section illustrating the closure part A of a fluid controller according to the third embodiment of the present invention.

Figure 4 is a section illustrating the closure part A of a fluid controller according to the fourth embodiment of the present invention.

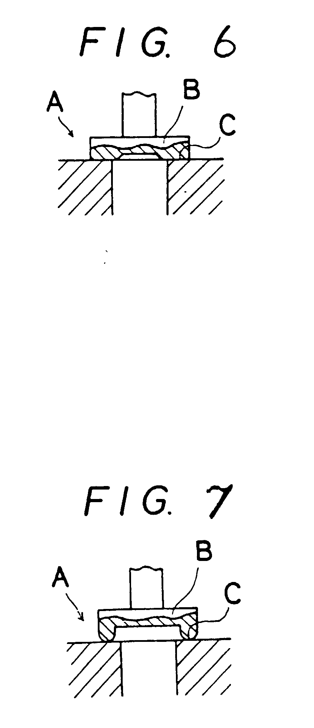

Figures 5 to 7 are explanatory drawings of the closure parts A according to the prior art.

In the drawings A is the closure part, 1 the valve part with the fluid flow passage, 2 the cover, 3 the cover nut, 4 the valve stem, 5 the driving unit, 6 the movable valve body, 7 the valve seat, 8 hydraulic fluid for activation, 9 thin metallic film, 10 the resilently deformable cushion body, 11 the valve body part which carries the film, and 12 the valve part which defines the seat.

Part 1 has fluid inlet 1a, fluid outlet 1b, a recess 1c, and fluid flow passages. Valve seat 7 is formed at the base of recess 1c. Cover 2 is securely installed on part 1 by tightening the nut 3. Further, inside the cover 2 is inserted the slidable stem 4 with valve body at the lower end thereof. A driving piston 5a is fixed to the upper end of stem 4 and drive unit 5 moves the piston unit 5.

The drive unit 5 comprises the piston 5a and cylinder 5b, and the stem 4 is vertically moved by pressure fluid 8 from the fluid supply inlet 5c or the fluid supply inlet 5d.

The closure part A which is a main feature of the present invention is comprised of valve body 6 and valve seat 7. Valve body 6 has an end portion 11 which is defined by the lower end of the stem 4. A thin metal film 9 covers base 11 and a resiliently flexible cushion body 10 is positioned between the valve body base 11 and film 9.

The thin metal film 9 is formed into a body having a cylindrical hollow section 9a to receive the valve stem and a rib section 9b. The film body 9 may be formed, for example by pressing a film of nickel or nickel alloy or by electrodeposition.

The circumferential edge of the rib section 9b is clamped between the part 1 and cover 2. The section 9a is installed in the recess 1c with the lower end of the stem 4 inserted. By tightening the cover 2 the airtightness of the valve recess 1c is maintained.

The cushion body 10 may be formed by a material or part which maintains appropriate elasticity and flexibility such for example as rubber, synthetic resin or a coil spring, in Figure 1 the body 10 is of fluoro-rubber formed into a disc.

Although in the embodiment of the present invention the cushion body 10 is preformed it can be formed in situ by pouring liquid resin into the space between 11 and the film.

As described above closure part A is incorporated into a piston driving mechanism. The fluid controller to which the closure part A is applied can be incorporated into other types of valves such as relief valves, check valves and pressure reducing valves.

Figure 2 shows the closure part A in a second embodiment of the present invention. The valve body 6 is formed by the valve body part 11 at the lower end of the stem 4. The thin metal film 9 is dished with a rim and the cushion body 10 is a coil spring. The cross section for inserting the body 10 comprises a groove 11a or part 11 and groove 9c on the body. Further, the rim of film 9 is welded to the external surface of the part 11.

In the embodiment of Figure 3 the body 10 again is inserted between the flat front surface of 11 and guide groove 9c in film 9.

In the embodiment of Figure 4 the dished film 9 has a contacting hemispherical rib 9d and the circumferential rim is welded to the external surface of the valve stem 4. Rubber or the like elastomer fills the space between the part 11 and film 9 to provide the cushion body.

In the foregoing embodiments, the circumference of the end of the film 9 is welded to the valve body base 11 or the valve seat base 12, but the film 9 can be tightly installed by the method other than welding such for example as adhesion or pressure welding and caulking.

The valve body base 11, valve seat base 12, the body of film 9 and resiliently flexible cushion body 10 may take shapes other than that as shown in the foregoing embodiments as long as the film 9 is contacted elastically to the valve seat base 12 or the valve body base 11 by means of the cushion body 10.

The operation of the fluid controller according to the present invention and as described above will now be explained.

The stem 4 is activated by the driving unit 5, and when the valve body 6 is lowered, the covered body of film 9 contacts the valve seat 7. Then, as the stem 4 continues to lower by a small distance, the cover body 9 is pushed against the top of the valve seat movement being allowed by resilient yielding or elasticity, the external surface of the film 9 seats in a slightly deformed condition along the profile of the external surface of the valve seat 7. This ensures a tight closure.

At that time, because the cover body 9 is formed by the thin film of metal, the cover body 9 closely contacts the external surface of the valve seat 7, and high adhesion with good conformability can be obtained.

In addition, the cover body 9 contacts elastically with the valve seat 7 by means of the cushion body 10, and even if a relatively large surface pressure is applied, the external surface of the valve seat 7 and the cover body 9 is free from defects such as dents and generation of the dust of pulverized particles caused by friction.

By pulling up the valve body 6, the cover body 9 and the cushion body 10 therein which have been slightly elastically deformed by the surface pressure applied are restored to their initial shape. By pulling up the valve body 6 continuously, the cover body 9 is separated from the valve seat base 12, allowing fluid passage.

## Claims

1. A fluid flow control assembly with a closure part comprising a valve body (6) and a valve seat (7) which contact one another to shut off the fluid flow characterised in that the valve body (6) comprises a valve body part (11), a metallic film (9) covering in an air-tight manner the lower face and the lower parts of the side faces of the valve body part (11), and having on the lower face a ring-shaped rib (9c or 9d) contacting the seat (7), and a resiliently deformable body (10) supporting the reverse side of the metallic film (9).

2. A fluid flow assembly according to Claim 1 wherein the resiliently deformable body (10) is made from a cushion of rubber or similar deformable material.

3. A fluid flow control assembly as claimed in Claim 1 wherein the resilient deformable body (10) is a coil spring and is inserted in the annular space defined between the rib (9c) and the lower face of the valve body part (11).

4. A fluid flow control assembly as claimed in Claim 1 wherein the metallic film (9) is dish-shaped and the end part of the circumferential rim of the metallic film (9) is welded to the body part (11).

5. A fluid flow control assembly as claimed in Claim 1 wherein the metallic film (9) has a cylindrical hollow section (9a) extending around the valve body part (11) and a rib section (9b) whose circumferential end is fixed in an airtight manner to the valve assembly.

6. A fluid flow control assembly as claimed in Claim 1 wherein the metallic film (9) is formed of nickel or nickel alloy.

## Patentansprüche

1. Durchflußregelungseinrichtung zum Regeln der Strömung eines Fluids, mit einem Ventilkörper (6) und einem Ventilsitz (7), wobei Ventilkörper (6) und Ventilsitz (7) einander berühren, wenn die Strömung des Fluids gesperrt werden soll, **dadurch gekennzeichnet, daß** der Ventilkörper (66) einen Ventilkörperteil (11) aufweist, daß die Unterseite und die unteren Bereiche der Seitenflächen des Ventilkörperteiles (11) mit einem Metallfilm (9) luftdicht bedeckt sind und daß die Unterseite mit einer ringförmigen Rippe (9c oder 9d) versehen ist, die zum Zusammenwirken mit dem Sitz (7) bestimmt ist und daß schließlich die Rückseite des Metallfilms (9) mit einem elastisch verformbaren Körper (10) versehen ist.

2. Durchflußregelungseinrichtung nach Anspruch 1, bei der der elastisch verformbare Körper (10) von einem Kissen aus Gummi oder entsprechend verformbarem Material gebildet ist.

3. Durchflußregelungseinrichtung wie in Anspruch 1 beansprucht, bei der der elastisch verformbare Körper (10) eine Wickelfeder ist und in den Ringspalt eingesetzt ist, der zwischen der Rippe (9c) und der Unterseite des Ventilkörperteiles (11) besteht.

4. Durchflußregelungseinrichtung wie in Anspruch 1 beansprucht, bei der der Metallfilm (9) tassenförmig ist und der Endbereich der Umfangsfläche des Metallfilms (9) an dem Ventilkörperteil (11) angeschweißt ist.

5. Durchflußregelungseinrichtung wie in Anspruch 1 beansprucht, bei der der Metallfilm (9) einen zylindrischen hohlen Abschnitt (9a) aufweist, der sich um den Ventilkörperabschnitt und einen Rippenabschnitt (9b) erstreckt und dessen Umfangsende luftdicht an die Ventileinrichtung befestigt ist.

6. Durchflußregelungseinrichtung wie in Anspruch 1 beansprucht, bei der der Metallfilm (9) aus Nickel oder einer Nickellegierung besteht.

## Revendications

1. Ensemble de commande d'écoulement de fluide avec une partie de fermeture comprenant un corps de vanne (6) et un siège de vanne (7) qui viennent en contact l'un avec l'autre pour interrompre l'écoulement de fluide, caractérisé en ce que le corps de vanne (6) comprend une partie de corps de vanne (11), un film métallique (9) recouvrant de façon étanche vis-à-vis de l'air la face inférieure et les parties inférieures des faces latérales de la partie de corps de vanne (11), et comportant sur la face inférieure une nervure en forme d'anneau (9c ou 9d) venant en contact avec le siège (7), et un corps élastiquement déformable (10) supportant la face arrière du film métallique (9).

2. Ensemble de commande d'écoulement de fluide selon la revendication 1, dans lequel le corps élastiquement déformable (10) est fait d'un coussin de caoutchouc ou de matériau déformable similaire.

3. Ensemble de commande d'écoulement de fluide selon la revendication 1, dans lequel le corps élastiquement déformable (10) est un ressort hélicoïdal et est inséré dans l'espace annulaire défini entre la nervure (9c) et la face inférieure de la partie de corps de vanne (11).

4. Ensemble de commande d'écoulement de fluide selon la revendication 1, dans lequel le film métallique (9) a une forme de cuvette et la partie d'extrémité du rebord circonférenciel du film métallique (9) est soudée à la partie de corps (11).

5. Ensemble de commande d'écoulement de fluide selon la revendication 1, dans lequel le film métallique (9) comporte une section creuse cylindrique (9a) s'étendant autour de la partie de corps de vanne (11) et une section de nervure (9b) dont l'extrémité circonférencielle est fixée de façon étanche vis-à-vis de l'air à l'ensemble de vanne.

6. Ensemble de commande d'écoulement de fluide selon la revendication 1, dans lequel le film métallique (9) est formé de nickel ou d'alliage de nickel.
